# EUROPEAN PATENT APPLICATION

(11) **EP 2 077 611 A2**
(43) Date of publication of application: **08.07.2009**
(21) Application number: 08021872.0
(22) Date of filing: 17.12.2008
(51) Int. Cl.: H02P 6/20, H02P 1/18

(54) **Method for operating a BLDC motors**

(30) Priority: 19.12.2007 GB 0724724; 20.12.2007 GB 0724835
(71) Applicant: Melexis NV, 8900 Ieper (BE)
(72) Inventor: Cot, Christophe, 1138 Sofia (BG); Dobrev, Dobromir, 1138 Sofia (BG); Gaydov, Stoyan, 1138 Sofia (BG); Peev, Rumen, 1138 Sofia (BG); Tsankov, Radostin, 1138 Sofia (BG)
(74) Representative: Wilson Gunn

(57) **Abstract**

A BLDC motor is operated by driving the motor with a first PWM driving signal during a start up phase of operation. Subsequent to the start up phase, the method switches to driving the motor with a second PWM driving signal for ongoing operation. In such manner, the operation of the motor can be controlled according to an optimised cycle for the initial conditions and a separate optimised cycle for ongoing operation. For instance, by driving the motor at increased PWM duty cycle in a start up phase the acceleration of the motor can be increased and thus the motor can achieve a desired rotation speed after a shorter time interval. Subsequently driving the motor with a lower PWM duty cycle allows the motor speed to be maintained at a desired nominal level whilst reducing the power consumption of the motor. Alternatively, initiating motor driving using a PWM driving signal at a first low duty cycle value in a start up phase; and increasing the driving signal duty cycle value progressively until a higher target PWM duty cycle value for ongoing operation is reached can enable a 'soft' start to be achieved thus reducing the potential for overload or for damage.

## Description

The present invention relates to improvements in or relating to BLDC motors and in particular to improvements in start and/or stop functions for such motors.

A BLDC motor typically comprises one or more stator coils and a permanently magnetised rotor. The rotor rotates in response to a driving voltage waveform applied to the coils. Whilst the rotor rotates suitable sensors and coil drivers are used to track the rotation and synchronise the driving waveform with the rotation. The speed of BLDC motors can be controlled by PWM or by an analogue input signal.

BLDC motors can be split in two divisions: BLDC motors with a ferromagnetic core and small BLDC motors without a ferromagnetic core.

The BLDC motors with ferromagnetic core are widely used in fan applications. Upon start up a typical BLDC motor with a ferromagnetic core launches immediately into driving mode. If rotation is not subsequently detected, a locked rotor mode can be entered to reduce damage to the motor in the event that there is a physical block to rotation. For a typical BLDC motor with a ferromagnetic core resulting in high value of the Back Electromagnetic Force (back EMF), the average current consumption during rotation is several times lower than peak current consumption during start-up sequence or locked rotor state. This uncontrolled peak/start-up current is frequently a source of damage or overload of the motor itself, the integrated electronics or the power supply. Another problem of BLDC motors may be increased static mechanical friction and/or cogging torque. As a result the motor does not start rotation without external help.

Small BLDC motors without a ferromagnetic core are often used as vibration actuators for such devices as mobile telephones, pagers and game console controllers. In more sophisticated games or phone applications, it is desirable for the vibration actuator to have a rapid reaction time thereby increasing realism and touch sensation conveyed by the controller. For instance the VibeTonz® performance criteria presently require that a vibration actuator should have a start time of <75ms, where the start time is defined as the time needed for the actuator to reach 50% of its steady state acceleration level corresponding to say 70.7% of its steady state speed. Similarly, the break time must be <50ms, where break time is defined as the time needed for the actuator acceleration level to drop below 0.04g (g ≈ 9.8ms⁻², the acceleration due to gravity at sea level on Earth).

Known BLDC vibration actuators do not meet the above criteria because they do not accelerate sufficiently quickly. This problem has been addressed by using BLDC motors that operate with an increased coil current, say 160mA (from a typical coil current of 75mA). This however leads to a significant increase in power consumption during motor operation, which is inadmissible especially for battery supplied applications.

It is therefore an object of the present invention to provide a BLDC motor and a method of operation the same that at least partially overcomes or alleviates the above problems.

According to a first aspect of the present invention there is provided a method of operating a BLDC motor, the method comprising the steps of: driving the motor with a first PWM driving signal during a start up phase of operation; and subsequent to the start up phase, switching to driving the motor with a second PWM driving signal for ongoing operation.

In such manner, the operation of the motor can be controlled according to an optimised cycle for the initial conditions and a separate optimised cycle for ongoing operator. The second PWM driving signal may be higher or lower than the first PWM driving signal depending upon the circumstances of operation. The first and/or second PWM driving signals may vary over time. This may ease the transition from first phase to second phase.

Ir one preferred implementation of the present invention the first PWM driving signal has a high duty cycle value and the second driving signal has a low duty cycle value.

By driving the motor at increased PWM duty cycle in a start up phase the acceleration of the motor can be increased and thus the motor can achieve a desired rotation speed after a shorter time interval. Subsequently driving the motor with a lower PWM duty cycle allows the motor speed to be maintained at a desired nominal level whilst reducing the power consumption of the motor.

Preferably the PWM duty cycle of the first driving signal is substantially 100%. Preferably the PWM duty cycle of the second driving signal is significantly lower than 100%. Preferably, the PWM duty cycle of the second driving signal may be in the range 25% to 70% and most preferably around 40%.

The start up phase may have a predefined duration. The duration of the start up phase may be in the range 50ms to 100ms. Alternatively, the start up phase may be terminated in response to a predetermined condition. The predetermined condition may be the motor speed exceeding a preset threshold level. The threshold level may be a preset fraction of steady state speed. In one preferred example, the threshold may be 0%-100% of the steady state speed. If desired, the threshold may be varied depending upon the desired steady state speed.

The start up phase may be initiated in response to a leading edge of an enable signal. Following the start up phase ongoing operation may continue until a trailing edge of said enable signal occurs.

The method may incorporate a stop phase. The stop phase may be initiated in response to the trailing edge of said enable signal. Preferably, during the stop phase the motor is driven with an anti-phase driving signal. The anti-phase driving signal may have a high PWM duty cycle value. Preferably, the anti-phase driving signal has a PWM duty cycle of substantially 100%.

The stop phase may have a predefined duration. The duration of the stop phase may be about 50ms. Alternatively, the stop phase may be terminated in response to a predetermined condition. The predetermined condition may be the motor speed dropping below a preset threshold level. The threshold level may be defined by reference to an equivalent level of acceleration. In one example, the acceleration threshold may be 0.04g. The threshold level may be a preset fraction of normal operating speed. In one example the threshold may be say 15% to 20% of the steady state speed which typically corresponds to acceleration level of about 0.04g.

In a further preferred implementation of the present invention the first PWM driving signal has a low duty cycle value and the second PWM driving signal has a high duty cycle value. In such an implementation, the method may comprise: initiating motor driving using a PWM driving signal at a first low duty cycle value in a start up phase; and increasing the driving signal duty cycle value progressively until a higher target PWM duty cycle value for ongoing operation is reached.

By driving the motor during a start up phase according to the above method, a 'soft' start is provided, with a target to reduce the peak/start-up current value to the same amplitude as the steady state rotation current value and thus reducing the potential for overload or for damage.

The target PWM duty cycle may have a high frequency, say around 30 kHz or similar.

The start up phase may have a predetermined maximum duration. The duty cycle value may be increased progressively from its initial low value to its target value over a period equal to the predefined duration of the start up phase. The PWM duty cycle value may be progressively increased in accordance with a suitable function of time. Typically the function may be a linear function. In alternative implementations however other suitable functions may be utilised.

The start up phase may be initiated in response to a leading edge of an enable signal. Hollowing the start up phase ongoing operation may continue until a trailing edge of said enable signal occurs.

The initial low output PWM duty cycle value is preferably less than 50%. This reduces peak/start-up current at least by a factor of two. In many cases this may still be sufficient to provide the necessary power to the motor to overcome the static mechanical friction plus the cogging torque and to start rotation. As a result, the initial low output duty cycle range may be between 20% and 50%. The target duty cycle value may be 100%, meaning full power applied to the motor. The target duty cycle may be substantially equal to the duty cycle of the signal applied on a speed control input.

The method may include monitoring a rotor position sensor to determine the position of the rotor during operation. The rotor position sensor may be used to synchronise the driving waveform with the rotation. The rotor position sensor may also be used to determine whether the rotor is rotating. Preferably, if rotation is not detected the driving output PWM duty cycle may continue progressively increasing above the control input PWM duty cycle value. This ensures proper rotation start-up of the motor also in case of increased mechanical friction and/or increased cogging torque. Preferably, if motor rotation is not detected during a predetermined time interval, the method switches the motor to a locked rotor protection mode. The predetermined time interval may be equal to the predefined duration of the start up phase.

After a predetermined number of full rotations have been detected, the start up method may include the step of comparing the instantaneous driving output PWM duty cycle value to the instantaneous control input PWM duty cycle value. The progressive increase of the driving output duty cycle value may be varied in response to the outcome of the comparison. In one embodiment, if the input duty cycle value is less than the output duty cycle value then the output duty cycle value is immediately decreased to the input duty cycle value; and if the input duty cycle value is greater than the output duty cycle value then the progressive increase in output duty cycle value is maintained until it reaches the input duty cycle value. In another embodiment progressive change of the output duty cycle may be used in both cases.

Rotor position and/or speed detection may be achieved by the use of one or more Hall sensors. Motor control may be achieved by use of control means incorporate any or all of control logic, a PWM controller and a full bridge driver.

The method may be applied to a single coil BLDC motor or to a multiple coil BLDC motor. The method may be applied to a motor used in a vibration actuator.

According to a second aspect of the present invention there is provided a method of operating a BLDC motor, the method comprising the steps of: driving the motor with a first PWM driving signal during a start up phase; and subsequent to the start up phase switching to driving the motor with a second PWM driving signal for ongoing operation wherein the first PWM driving signal has a high duty cycle value and the second driving signal has a low duty cycle value.

The method of the second aspect of the present invention may incorporate any or all features of the method of the first aspect of the present invention as desired or as appropriate.

According to a third aspect of the present invention there is provided a method of operating a BLDC motor during a start up phase, the method comprising the steps of: initiating motor driving using a pulse width modulated (PWM) driving signal at a first low duty cycle value in a start up phase; and increasing the driving signal duty cycle value progressively until a higher target PWM duty cycle value for ongoing operation is reached.

The method of the third aspect of the present invention may incorporate any or all features of the method of the first or second aspects of the present invention as desired or as appropriate.

According to a fourth aspect of the present invention there is provided a BLDC motor operable in accordance with the method of the first, second or third aspects of the present invention.

The motor of the fourth aspect of the present invention may incorporate any or all features of the method of the first, second or third aspects of the present invention as desired or as appropriate.

The motor may comprise one or more Hall sensors for detecting rotor position and/or speed. The motor may incorporate control means. The control means may incorporate any or all of control logic, a PWM controller and a full bridge driver.

The motor may be a single coil BLDC motor or may be a BLDC motor with multiple coils. The motor may be adapted to provide a vibration actuator.

According to a fifth aspect of the present invention there is provided a vibration actuator comprising a BLDC motor according to the fourth aspect of the present invention or a BLDC motor operable in accordance with the method of the first, second or third aspects of the present invention.

The vibration actuator of the fifth aspect of the present invention may incorporate any or all features of the method of the first, second or third aspects of the present in vention or the motor of the fourth aspect of the present invention as desired or as appropriate.

In order that the invention is more clearly understood, one embodiment will now be described further below by way of example only and with reference to the accompanying drawing in which:-
- Figure 1: is a schematic block diagram of a single coil BLDC motor according to the present invention;
- Figure 2: is a schematic timing diagram indicating the relative average currents flowing in the BLDC motor at different modes of operation;
- Figure 3a: is a schematic timing diagram indicating the driving of the BLDC motor in different modes of operation;
- Figure 3b: is an expanded view of part of the timing diagram of figure 3 also illustrating the accompanying variation in coil current; and
- Figure 4: is a schematic timing diagram indicating the progressive increase in the PWM output duty cycle during the start up phase of a BLDC motor in accordance with the present invention.

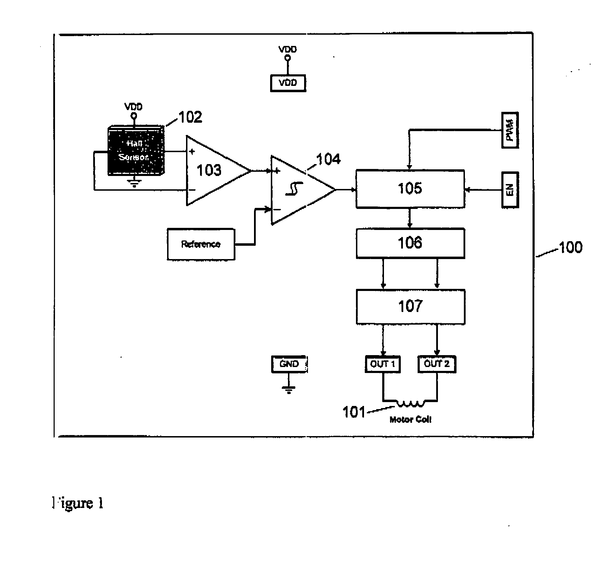

Turning now to figure 1, a single coil BLDC motor 100 comprises a stator coil 101 driven via a pair of contact OUT1 and OUT2. The motor 100 further comprises a Hall sensor 102 operable to sense the variation in magnetic field due to motor rotation. The output of the Hall sensor 102 is fed via a chopped amplifier 103 to one input of a hysteresis comparator 104, the other input of said comparator being connected to a reference voltage. The comparator 104 thus provides an output indicative of the instantaneous position of the rotor of the motor 100 to control logic 105. The control logic 105 is operable to control a full bridge driver 107 to drive the coil 101 via a PWM control unit 106. The PWM control unit 106 allows the coil 101 to be driven at selected power levels determined by the duty cycle of the PWM modulation.

The control logic 105 may be provided with an enable input EN. Whilst the control logic 105 receives an enable signal via EN it is operable to cause full bridge driver 107 to drive the coil 101. In operation, the full bridge driver 107 may activate only its high side or low side transistors at any one tune thus having the effect of shorting the motor coil to the supply rails.

The control logic 105 may also be provided with a speed control input.

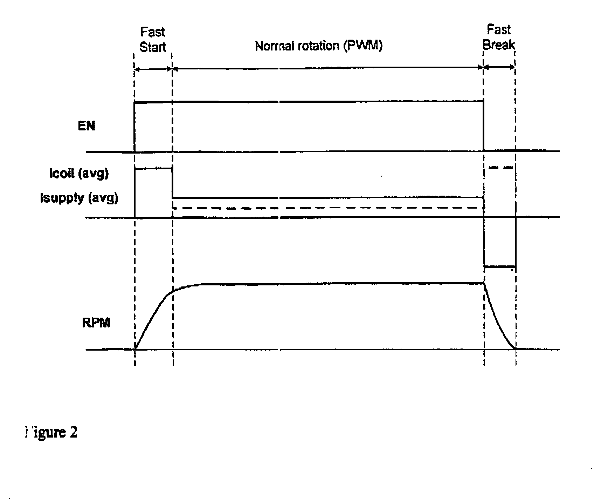

Turning now to figure 2, during operation, the motor 100 has three different modes of operation, a start up phase (fast start), an ongoing operation phase (normal rotation) and a stop phase (fast break).

The start phase is initiated by the control logic 105 in response to a rising edge on the enable input EN. During the start up phase both the averaged supply current (and consequently the averaged coil current) are raised to a maximum value. This is achieved by the PWM controller operating at substantially 100% PWM duty cycle. In turn, this enables the rapid acceleration of the motor from standstill to its normal operating speed as is illustrated on the bottom trace of figure 2. The start up phase is ended either after a predetermined time, say 100ms or in response to the motor speed exceeding a predetermined threshold speed.

At the end of the start up phase, the PWM controller 106 is switched to a lower PWM duty cycle, say 40%. The averaged supply and coil voltages thus drop back to much lower values. The motor thus operates at a relatively low power consumption during the ongoing operation phase.

The stop phase is initiated by the control logic 105 in response to a falling edge on the enable input EN. During the stop phase both the averaged supply current and averaged coil current are raised to a maximum value. The supply current is however opposed to the motion of the motor, thus rapidly decelerating the motor. The stop phase is ended either after a predetermined time, say 50ms or in response to the motor speed dropping below a predetermined speed threshold.

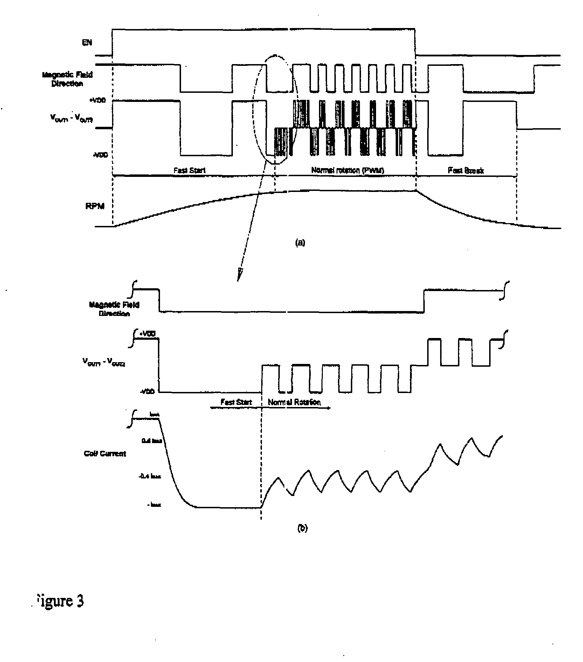

Taring now to figures 3a and 3b, the above is illustrated in greater detail. In particular, the driving voltage supplied to the coil 101 V_{OUT1} - V_{OUT2} is shown along with the magnetic field orientation as measured by the Hall sensor 102. It can also clearly be seen at the moment of transition from start up phase to ongoing operation phase the driving voltage V_{OUT1} - V_{OUT2} reverts to PWM mode from constant driving. Additionally, it can be seen that once the stop phase is initiated the driving voltage V_{OUT1} - V_{OUT2} reverts to constant driving but in a direction opposed to motor rotation.

The affect of the transition from start up phase to ongoing operation phase on the coil voltage is illustrated in particular detail in figure 3b. Here it can be seen that in response to the drop in PWM cycle from substantially 100% to substantially 40%, the average magnitude of the coil current drops from a maximum value to around 40% of the maximum value. An additional positive effect is that this reduction in the coil current from 100% to 40% corresponds to reduction in the average supply source current from 100% to about 20% depending on the coil inductance value.

The motor 100 is particularly suitable for use as a vibration actuator for a mobile phone, pager, games console controller or similar. The start up phase and stop phase described herein allow the motor to start and stop rapidly in response to an enable signal and the motor does not have excessive power consumption. Accordingly, the above motor and method of operation can be utilised to provide a vibration actuator that complies with the VibeTonz® performance criteria.

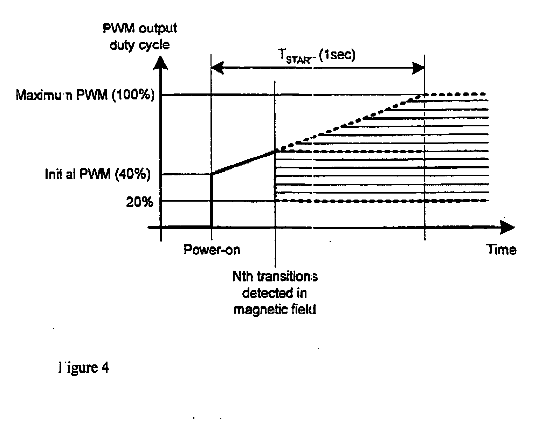

In another embodiment of the present invention, in order to reduce peak-start-up current and allow proper initial rotor acceleration to be controlled (a soft start), a BLDC motor is started up according to the method illustrated with reference to the output PWM duty cycle diagram of figure 4.

In this method, the start up phase lasts for up to a predefined duration, T_{START}. In the present example, T_{START} is Is. After the start up phase, during ongoing operation the motor is driven by suitable driving waveforms operating at substantially 100% PWM duty cycle value.

At the initiation of the start up phase the motor is driven by a PWM driving waveform with a low duty cycle value. In the illustrated example, the initial output PWM duty cycle value is 40%. It is of course possible that different initial PWM duty cycle values could be chosen depending on circumstances. Typically, the initial duty cycle value might be expected to be in the range 25% to 50%.

The low initial driving output PWM duty cycle value limits the start-up current and the initial torque applied to the rotor. This can help reduce damage in the motor, driving circuit or supply source if the rotor is blocked. This also means that the acceleration of the rotor can be more effectively and efficiently controlled.

The rotor position during both the start up phase and ongoing operation is detected by a suitable position sensor. Typically, this may comprise one or more Hall elements but other arrangements are possible. The rotor position sensor is operable to determine whether rotation is taking place and to synchronise the driving waveform with rotation.

After the start up phase is initiated, the driving output duty cycle value is progressively increased until it reaches the target duty cycle value for ongoing operation In the present example, this increase is in accordance with a linear function of time. The function is arranged to reach the target duty cycle value for ongoing operation upon the expiry of the start up phase. If rotation is not detected the output duty cycle continues progressive increasing above the input duty cycle value. This ensures proper rotation start-up of the motor in case of increased mechanical friction and/or cogging torque. In case motor rotation is still not detected during a predetermined time interval, the method may switch the motor to a locked rotor protection mode.

In response to the rotor undergoing four opposite magnetic field transitions (typically) a 360 degree rotation for 2 pole-pair BLDC motor), the method of the invention may include the further step of comparing the output duty cycle value with the input duty cycle value. In the event that the input duty cycle value is less than the output duty cycle value then the output duty cycle value is immediately decreased to the input duty cycle value. In the event that the input duty cycle value is greater than the output duty cycle value then the progressive increase in output duty cycle value is maintained until it reaches the input duty cycle value. In this way, the motor can, in favourable circumstances, still accelerate rapidly to the ongoing operation target value.

It is of course to be understood that the invention is not to be restricted to the details of the above embodiment, which is described by way of example only.

## Claims

1. A method of operating a BLDC motor, the method comprising the steps of:
driving the motor with a first PWM driving signal during a start up phase of operation; and subsequent to the start up phase, switching to driving the motor with a second PWM driving signal for ongoing operation.

2. A method as claimed in claim 1 wherein the first and/or second PWM driving signal varies over time.

3. A method as claimed in claim 1 or claim 2 wherein the first PWM driving signal has a high duty cycle value and the second PWM driving signal has a low duty cycle value.

4. A method as claimed in claim 3 wherein the start up phase may have a predefined duration or is terminated in response to the motor speed exceeding a preset threshold level.

5. A method as claimed in claim 4 wherein the threshold is varied depending upon the desired steady state speed.

6. A method as claimed in any one of claims 2 to 5 wherein the start up phase is initiated in response to a leading edge of an enable signal and ongoing operation continues until a trailing edge of said enable signal occurs when a stop phase is initiated.

7. A method as claimed in claim 6 wherein during the stop phase the motor is driven with an anti-phase driving signal, the anti-phase driving signal having a high PWM duty cycle value.

8. A method as claimed in claim 6 or claim 7 wherein the stop phase has a predefined duration or the stop phase is terminated in response to the motor speed dropping below a preset threshold level.

9. A method as claimed in claim 8 wherein the threshold level is defined by reference to an equivalent level of acceleration or a preset fraction of normal opera ting speed.

10. A method as claimed in claim 1 or claim 2 wherein the first PWM driving signal has a low duty cycle value and the second PWM driving signal has a high duty cycle value.

11. A method as claimed in claim 10 wherein the method comprises: initiating motor driving using a PWM driving signal at a first low duty cycle value in a start up phase; and increasing the driving signal duty cycle value progressively until a higher target PWM duty cycle value for ongoing operation is reached.

12. A method as claimed in claim 11 wherein the start up phase has a predetermined maximum duration and wherein the duty cycle value is increased progressively from its initial low value to its target value over a period equal to the predefined duration of the start up phase.

13. A method as claimed in claim 12 wherein the initial low output PWM duty cycle value is less than 50% and the target duty cycle is substantially equal to the duty cycle of the signal applied on a speed control input.

14. A method as claimed in any one of claims 10 to 13 wherein the method includes monitoring a rotor position sensor to determine the position of the rotor during operation and/or to synchronise the driving waveform with the rotation and/or to determine whether the rotor is rotating.

15. A method as claimed in claim 14 wherein if rotation is not detected the driving output PWM duty cycle may continue progressively increasing above the control input PWM duty cycle value.

16. A method as claimed in claim 15 wherein if motor rotation is not detected during a predetermined time interval, the method switches the motor to a locked rotor protection mode.

17. A method as claimed in any one of claims 14 to 16 wherein after a predetermined number of full rotations have been detected, the start up method includes the step of comparing the instantaneous driving output PWM duty cycle value to the instantaneous control input PWM duty cycle value and wherein: if the input duty cycle value is less than the output duty cycle value then the output duty cycle value is immediately decreased to the input duty cycle value; and if the input duty cycle value is greater than the output duty cycle value then the progressive increase in output duty cycle value is maintained until it reaches the input duty cycle value.

18. A vibration actuator comprising a BLDC motor operable in accordance with the method of any one of the preceding claims.
